(19) Europäisches Patentamt / European Patent Office / Office européen des brevets

(11) **EP 2 656 565 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(51) Int Cl.:
*H04L 25/03* (2006.01)    *H04L 25/06* (2006.01)
*H04L 27/26* (2006.01)    *H04J 11/00* (2006.01)
*H04L 1/00* (2006.01)

(21) Anmeldenummer: **11793798.7**

(22) Anmeldetag: **09.12.2011**

(86) Internationale Anmeldenummer:
**PCT/EP2011/072297**

(87) Internationale Veröffentlichungsnummer:
**WO 2012/084551 (28.06.2012 Gazette 2012/26)**

(54) **VERFAHREN ZUR VERRINGERUNG DER STÖREINFLÜSSE VON PULSFÖRMIGEN STÖRSIGNALEN BEI EINER OFDM-BASIERTEN DATENÜBERTRAGUNG**

METHOD FOR REDUCING THE INTERFERING INFLUENCES OF PULSE-SHAPED INTERFERENCE SIGNALS IN OFDM-BASED DATA TRANSMISSION

PROCÉDÉ DESTINÉ À RÉDUIRE LES INFLUENCES PERTURBATRICES DE SIGNAUX PERTURBATEURS PULSÉS DANS UNE TRANSMISSION DE DONNÉES UTILISANT L'OFDM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2010   DE 102010056087**

(43) Veröffentlichungstag der Anmeldung:
**30.10.2013   Patentblatt 2013/44**

(73) Patentinhaber: **Deutsches Zentrum für Luft- und Raumfahrt e.V.**
**51147 Köln (DE)**

(72) Erfinder:
• **GLIGOREVIC, Snjezana**
**82205 Gilching (DE)**
• **SCHNELL, Michael**
**82205 Gilching (DE)**

(74) Vertreter: **von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) Entgegenhaltungen:
WO-A1-2004/002101

• **SCHNELL M ET AL: "Interference mitigation for broadband L-DACS", DIGITAL AVIONICS SYSTEMS CONFERENCE, 2008. DASC 2008. IEEE/AIAA 27TH, IEEE, PISCATAWAY, NJ, USA, 26. Oktober 2008 (2008-10-26), Seiten 2.B.2-1, XP031372558, ISBN: 978-1-4244-2207-4**
• **KYOUNGNAM SEO ET AL: "Improved impulse detection in power line communication systems", POWER LINE COMMUNICATIONS AND ITS APPLICATIONS, 2008. ISPLC 2008. IEEE INTERNATIONAL SYMPOSIUM ON, IEEE, PISCATAWAY, NJ, USA, 2. April 2008 (2008-04-02), Seiten 374-379, XP031247928, ISBN: 978-1-4244-1975-3**
• **ZOGAKIS T N ET AL: "Impulse noise mitigation strategies for multicarrier modulation", PROCEEDINGS OF THE INTERNATIONAL CONFERENCE ON COMMUNICATIONS (ICC). GENEVA, MAY 23 - 26, 1993; [PROCEEDINGS OF THE INTERNATIONAL CONFERENCE ON COMMUNICATIONS (ICC)], NEW YORK, IEEE, US, Bd. 2, 23. Mai 1993 (1993-05-23), Seiten 784-788, XP010137084, DOI: 10.1109/ICC.1993.397380 ISBN: 978-0-7803-0950-0**

**Beschreibung**

Die Erfindung betrifft ein Verfahren zur Verringerung der Störeinflüsse von pulsförmigen Störsignalen bei einer OFDM-basierten Datenübertragung.

In einigen Frequenzbändern werden Übertragungssysteme von pulsartigen Systemen gestört, die entweder in demselben oder in benachbarten Frequenzbändern operieren. Solche pulsartige Störer sind von kurzer Dauer, haben aber meist eine höhere Leistung. Besonders in Mehrträgerübertragungssystemen wird die Systemperformanz durch einen Pulsstörer gravierend beeinträchtigt, da dieser viele Modulationssymbole überlagert. Aufgrund der hohen Leistung sind solche Pulsstörer im Empfangssignal leicht zu erkennen.

Folgende bekannte Verfahren kann man einsetzen, um die Systemperformanz unter solchen Interferenzbedingungen zu verbessern:

Die "Erasure"-Dekodierung ermöglicht die richtige Dekodierung der Nutzdaten trotz der Überlagerung des Störsignals am Dekodereingang. Deutliche Performanzgewinne durch "Erasure"-Dekodierung zur Verbesserung der Systemperformanz unter dem Einfluss eines Pulsstörers in einem OFDM-System wurden in "Interference Mitigation for Future L-Band Digital Aeronautical Communications Systems", Schnell, Michael und Brandes, Sinja und Gligorevic, Snjezana und Walter, Michael und Rihacek, Christoph und Sajatovic, Miodrag und Haindl, Bernhard, In: Proceedings of the 27th Digital Avionics Systems Converence, 2008-10-26 - 2008-10-30, St. Paul, Minnesota, 2008, publiziert. Bei der "Erasure"-Dekodierungen werden 'Erasures' am Decoder-Eingang gesetzt - d.h. die Kanalinformation wird gelöscht und damit die Zuverlässigkeit der betroffenen Symbole auf null gesetzt. Dieser Ansatz ist erwähnt in folgenden Veröffentlichungen: Als "Erasure Insertion" in A. Batra and J. R. Zeidler, "Narrowband interference mitigation in BICM OFDM systems", in Proc. 2009 IEEE Intl. Conf. Acoustics, Speech, and Signal Processing, Taipei, Tiawan, Apr. 2009, und als "Erasures for Convolutional Codes" in Fiebig UC, Robertson P.

Soft-decision and erasure decoding in fast frequency-hopping systems with convolutional, turbo, and reed-solomn codes. IEEE Transactions Communications 1999; 47(11): 1646-1654. Man findet einige Beispiele auch unter Soft-Demapping oder Soft-Demapper. Die Grundlage für diesen Ansatz ist die Definition der Zuverlässigkeitswerte (oft auch L-Werte oder Soft values genannt) für einen Übertragungskanal (Beispiel Referenzbuch: M.Bossert: Kanalcodierung, Stuttgart: Teubner, 1998, ISBN 3-519-16143-5). Der Vorteil der Nutzung von solchen "Soft Values" für die Domodulation, Entzerrung und Decodierung ist gezeigt in Hagenauer, J.: Soft-in/soft-out: The benefits of using soft-decisions in all stages of digital receivers. In: 3rd International Workshop on DSP Techniques applied to Space Communications, ESTEC Noordwijk, Netherlands, September 1992.

Die "Pulsausblendung" reduziert den Einfluss eines Pulsstörers am Empfänger. Ohne diese Maßnahme versagt die am Empfängereingang notwendige Synchronisation häufig, die für die weitere Verarbeitung des Empfangssignals Voraussetzung ist. Nachfolgende Maßnahmen der digitalen Signalverarbeitung zur Störunterdrückung, wie beispielsweise die "Erasure"-Dekodierung, bleiben in diesem Fall wirkungslos. Der Stand der Technik zur Pulsausblendung umfasst im Wesentlichen die folgenden zwei Möglichkeiten: Das "Pulse Blanking" und das "Pulse Clipping". Während beim "Pulse Blanking" das Empfangssignal während der Dauer des Störpulses vollständig auf null gesetzt wird, wird beim "Pulse Clipping" das Empfangssignal im entsprechenden Zeitbereich auf einen konstanten Wert begrenzt. Beide Techniken können als eine Art Signalfensterung mit einem rechteckförmigen Fenster dargestellt werden, d.h. entsprechen einer Multiplikation des Empfangssignals mit einem Rechteckfenster.

Die bekannten Techniken zur Pulsausblendung haben den entscheidenden Nachteil, dass das Empfangssignal dadurch derart beeinflusst wird, dass eine nachfolgende "Erasure"-Dekodierung nicht mehr sinnvoll angewandt werden kann, d. h. aus der Kombination von Pulsausblendung mit "Erasure"-Dekodierung kann kein zusätzlicher Gewinn erzielt werden.

Sowohl "Pulse Blanking" als auch "Pulse Clipping" verursachen also eine Verzerrung des Empfangssignals. Dies gilt insbesondere auch für Mehrträgerübertragungssysteme. Die bei "Pulse Blanking" oder "Pulse Clipping" durchgeführte rechteckförmige Fensterung des Empfangssignals zerstört in diesem Fall die Orthogonalität des Mehrträgersignals, wodurch sich die einzelnen Subträger und damit die übertragenen Modulationssymbole gegenseitig stören. Da die Fensterform bekannt ist, die zum "Pulse Blanking" bzw. "Pulse Clipping" eingesetzt wurde, kann der Einfluss von "Pulse Blanking" bzw. "Pulse Clipping" durch einen geeigneten Entzerrer im Empfänger deutlich verringert werden. Die Reduktion des Einflusses auf das Mehrträgersignal (Nutzsignal) ist Stand der Technik und nicht Gegenstand dieser Erfindung. Allerdings wird durch die rechteckförmige Fensterung auch das Signal des Pulsstörers beeinflusst. Liegt das Störsignal im Frequenzbereich vor der Fensterung nicht vollständig in der Bandbreite des Nutzsignals, sondern beispielsweise am Rand der Nutzsignalbandbreite, so erstreckt sich der Störeinfluss des Pulsstörers nur auf einen Teil der Subträger des Nutzsignals. Die rechteckförmige Fensterung bewirkt jedoch, dass sich der Störeinfluss des Pulsstörers verbreitert und deutlich mehr Subträger betrifft. Im Extremfall wird so der Störeinfluss des Pulsstörers auf die gesamte Nutzsignalbandbreite ausgedehnt, so dass alle Subträger und somit Modulationssymbole gestört werden. Nachdem nun nicht mehr nur einzelne Modulationssymbole durch den Pulsstörer betroffen sind, sondern viele bzw. alle, bringt eine Kennzeichnung der betroffenen Modulationssymbole durch "Erasure"-Setzung keinen Performanzgewinn in einem nachfolgenden "Erasure"-Dekoder. Daher kann Pulsausblendung mit rechteckförmiger Fensterung nicht gewinnbringend mit "Erasure"-Dekodierung kombiniert werden.

Aus WO-A-2004/002101 ist ein Verfahren bekannt, das bei der Störimpulsunterdrückung (Pulse Blanking) in Mehrwegeübertragungssystemen einsetzbar ist. Dabei umfasst das bekannte Verfahren im Anschluss an eine A/D-Wandlung der Signale folgende Schritte.

1. Detektion des Pulsstörers

2. Auslöschung (Blanking) der betroffenen Abtastwerte (Samples)

3. Bestimmung der Korrekturwerter für die Nutzträger anhand der bekannten Pilotsymbole oder einer (außer Pilotsymbolen nicht speziell definierten) A-priori-Information.

4. Schätzung bzw. Rekonstruktion der übertragenen, gelöschten Symbole durch Subtraktion der Korrekturwerte der ausgelöschten Nutzträger von der Schätzung des Empfangssignals nach dem Blanking (diese Subtraktion der Korrekturwerte erfolgt beispielsweise gemäß Block 512 in Fig. 5 von WO-A-2004/002101).

Diese vier Hauptschritte sind auf der Seite 20, Zeile 24 bis 27 der WO-A-2004/002101 sowie auf den darauffolgenden Seiten dieser Druckschrift erläutert.

Das bekannte Verfahren ist insbesondere durch die zuvor genannten Schritte 3 und 4 spezifiziert. Dabei wird das Empfangssignal nach dem Blanking als Summe des Nutzsignals und der negativen Korrekturwerter der gelöschten Sampels dargestellt. Letztere werden aus der Verzerrung der bekannten Pilotsymbole geschätzt. Bei der Schätzung handelt es sich um eine MSE-basierte Schätzung der Korrekturwerte für die Nutzsignale (siehe Seiten 12 bis 17). Lediglich nebenbei wird erwähnt, dass bei dem bekannten Verfahren als Blanking-Fenster eine beliebige Fensterform verwendet werden kann (siehe z. B. in Zeile 13 auf Seite 19 "some shaping like linear or raised cosine ending transitions", in Zeile 26 der Seite 21 "Alternatively, shaped blanking windows with smooth transitions at the end can be applied" und im Anspruch 13 auf Seite 26 "... and a blanking window with smooth transitions at end").

Schließlich ist in SCHNELL M ET AL: "Interference mitigation for broadband L-DACS", DIGITAL AVIONICS SYSTEMS CONFERENCE, 2008. DASC 2008. IEEE/AIAA 27TH, IEEE, PISCATAWAY, NJ; USA, 26. Oktober 2008 (2008-10-26) Seiten 2.B.2-1, XP031372558, ISBN: 978-1-4244-2207-4 ein Verfahren nach dem Oberbegriff des Anspruchs 1 beschrieben.

Aufgabe der Erfindung ist, die negativen Effekte zu reduzieren, die durch Pulsausblendung mit einem Rechteckfenster entstehen, und dadurch verursachte Performanzverluste zu verringern.

Zur Lösung dieser Aufgabe wird mit der Erfindung ein Verfahren zur Verringerung der Störeinflüsse von pulsförmigen Störsignalen bei einer OFDM-basierten Datenübertragung vorgeschlagen, und zwar mit den im Anspruch 1 angegebenen Schritten. Einzelne Ausgestaltungen der Erfindung sind Gegenstand der Unteransprüche.

Normalerweise handelt es sich bei Übertragungssignal um ein Mehrträgerfrequenzsignal, dass den einzelnen Trägerfrequenzen zugeordnete modulierte Daten aufweist und diese überträgt.

Nach der Erfindung ist also vorgesehen, dass das mit der Fensterfunktion multiplizierte Übertragungssignal nach einer Übertragungskanalschätzung und Signalentzerrung dekodiert wird, wobei bei der Signalentzerrung den einzelnen Trägerfrequenzen jeweils zugeordnete Daten ein Zuverlässigkeitswert zugeordnet wird, der beschreibt, mit welcher Wahrscheinlichkeit die den einzelnen Trägerfrequenzen zugeordneten geschätzten Daten zutreffend geschätzt worden sind, und dass der Zuverlässigkeitswert für die Daten der von einem pulsförmigen Störsignal betroffenen Trägerfrequenzen vor der Dekodierung jeweils auf null gesetzt wird.

Zweckmäßig ist es ferner, wenn das pulsförmige Störsignal im Übertragungssignal durch die Multiplikation des Übertragungssignals mit der Fensterfunktion ausgeblendet wird, indem die Fensterfunktion das pulsförmige Störsignal auf null oder auf Werte ungleich null herabsetzt. Hierbei können innerhalb desselben Fensters einzelne Abtastwerte auf Null und andere auf einen anderen Wert gesetzt werden. Beim "pulse blanking" bzw. "pulse clipping" sind im Regelfall sämtliche Werte auf Null bzw. sämtliche Werte auf ungleich Null gesetzt, was bei der Erfindung ebenfalls möglich ist.

Zweckmäßig ist es ferner, wenn die Multiplikation digital erfolgt, wobei die Fensterfunktion in Form diskreter Werte zu vorgegebenen Abtastzeitpunkten vorliegt und das Nutzsignal abgetastet sowie die Nutzsignal-Abtastwerte mit den Werten zu den zeitlich entsprechenden Abtastzeitpunkten der Fensterfunktion multipliziert werden.

Die Verbreiterung des Pulsstörers im Frequenzbereich durch die rechteckförmige Fensterung bei der Pulsausblendung wird erfindungsgemäß dadurch verringert, dass das gestörte Empfangssignal mit einem geeignetem Fenster multipliziert wird, das keine "harten Übergänge", also keine Sprungfunktionsanteile (d.h. keine 1-0- oder 0-1-Sprünge einer Sprungfunktion) aufweist wie das Rechteckfenster. Erfindungsgemäß werden im Empfangssignal durch die Pulsausblendung keine abrupten Änderungen mehr erzeugt, sondern "weiche" Übergänge an den Stellen, an denen eine Pulsausblendung durchgeführt wurde. Eine spektrale Verbreiterung des Pulsstörers wird dadurch weitgehend vermieden. Dies liegt an den besseren spektralen Eigenschaften des erfindungsgemäß gewählten Fensters im Vergleich zum Rechteckfenster. Nachdem die Störleistung auf einen Teil der Subträger reduziert bleibt, ermöglicht die Pulsausblendung mit erfindungsgemäß geeignetem Fenster eine gewinnbringende Kombination von Pulsausblendung mit "Erasure"-Dekodierung.

Das erfindungsgemäße Verfahren ist vor allem dadurch gekennzeichnet, dass man eine weiche Fensterung vornimmt und anschließend eine Erasure-Dekodierung durchführt. Die einzelnen Schritte des erfindungsgemäßen Verfahrens sind wie folgt:

a) Detektion des Pulsstörers
b) Auslöschung (Blanking) der betroffenen Abtastwerte (Samples) mit einer weichen Fensterfunktion und
c) Setzen der Zuverlässigkeitswerte der von der Interferenz betroffenen Nutzträger auf null, und zwar am Eingang des Decoders (sogenannte Erasure-Dekodierung).

Dem erfindungsgemäßen Verfahren sowie dem bekannten Verfahren gemeinsam sind die jeweils zuvor genannten Schritte a) und b) sowie ganz allgemein eine Kanalschätzung und Entzerrung. Dabei wird das Empfangssignal aus dem Zeitbereich in den Frequenzbereich transformiert, der der eigentliche Modulationsbereich ist. Während die Schritte a) und b) im Zeitbereich erfolgen, wird der Schritt c) des Verfahrens nach der Erfindung im Frequenzbereich durchgeführt.

Im Unterschied zum Stand der Technik wird allerdings nach der Erfindung eine Bestimmung der Korrekturwerte bzw. der Korrektur gelöschter Träger nicht vorgenommen.

Die Neuheit des erfindungsgemäßen Verfahrens wird durch die Kombination der zuvor genannten Verfahrensschritte begründet. Insbesondere ist die Neuheit der Erfindung in Kombination der Verwendung einer Erasure-Dekodierung auf Basis eines einer weichen Fensterung unterzogenen Übertragungssignals zu sehen.

Die Unterschiede des erfindungsgemäßen Verfahrens gegenüber dem Stand der.Technik lassen sich wie folgt zusammenfassen:

1. Die Differenzierbarkeit der Fensterfunktion;
2. Nutzung von Zuverlässigkeitswerten für die Dekodierung statt Nutzung von Korrekturwerten für die gelöschten, vom blanking betroffene Trägerfrequenzen;
3. Die Verwendung der Zuverlässigkeitswerte auch für eine anschließende Dekodierung.

Die Erfindung wird ganz allgemein durch folgende Merkmale bestimmt:

- Für die Ausblendung des Pulsstörers wird nicht, wie im Stand der Technik üblich, ein Rechteckfenster verwendet, sondern eine Fensterform, die günstigere spektrale Eigenschaften hat. Insbesondere erfolgt die Auswahl der Fensterform dahingehend, dass die Störleistung möglichst wenig im Frequenzbereich verschmiert wird. Dies gelingt mit Fensterformen, die entweder ein frequenzbegrenztes Spektrum besitzen oder deren Spektrum schnell abklingt.

- Durch Anwendung einer Fensterform mit günstigen spektralen Eigenschaften wie oben beschrieben, bleibt der wesentliche Einfluss eines Pulsstörers auf einen Teil der Subträger begrenzt. Ein Entzerrer zur Verringerung der durch Pulsausblendung eingebrachten Störung in das empfangene Nutzsignal weist eine geringere Komplexität auf, da er zur Entzerrung weniger gestörte Subträger berücksichtigen muss. Im Gegensatz dazu müsste ein Entzerrer zur Verringerung der durch Pulsausblendung gemäß dem Stand der Technik (Rechteckfenster) verursachten Störungen alle Subträger berücksichtigen.

- Anstelle der rechteckigen Pulsausbildung wird eine weiche Pulsausblendung verwendet, um eine Verschmierung der Störleistung des Pulsstörers über die gesamte Nutzsignalbandbreite zu verhindern. Der Einfluss des Pulsstörers bleibt so auf einen Teil der Subträger begrenzt.

- Bei Pulsausblendung gemäß dem Stand der Technik (Rechteckfenster) werden alle Subträger des Nutzsignals gestört. Dadurch ergibt sich eine deutliche Reduktion des Signal-Stör-Verhältnisses auf allen Subträgern, die sich auf die Dekodierungsperformanz negativ auswirkt. Dagegen bleibt im vorgestellten Verfahren die durch Pulsausblendung eingebrachte Störung auf einen Teil der Subträger begrenzt. Die restlichen Subträger weisen ein nahezu unverändertes Signal-Stör-Verhältnis auf. Somit lässt sich das vorgestellte Verfahren gewinnbringend mit "Erasure"-Dekodierung kombinieren.

- Die Begrenzung der Störleistung auf einen Teil der Subträger erlaubt, die Modulationssymbole der gestörten Subträger als "Erasures" zu deklarieren und anschließend eine "Erasure"-Dekodierung durchzuführen. Die Kombination von weicher Pulsausblendung mit "Erasure"-Dekodierung erzielt eine deutlich bessere Systemperformanz als rechteckige Pulsausblendung.

Die Erfindung wird nachfolgend anhand einiger Ausführungsbeispiele sowie unter Bezugnahme auf die Zeichnung näher erläutert. Im Einzelnen zeigen dabei:

Fig. 1    ein Beispiel für ein digitales Empfangssystem mit Pulsausblendung,

Fig. 2    ein Beispiel für einen Pulsstörer sowie eine Fensterfunktion für rechteckige Pulsausblendung (Fig. 2a) und die zugehörige Fouriertransformierte der Fensterfunktion für rechteckige Pulsausblendung (Fig. 2b),

Fig. 3    eine logarithmische Frequenzbereichsdarstellung der Überlagerung des beispielhaften OFDM-Nutzsignals mit dem Pulsstörer vor der rechteckigen Pulsausblendung (Fig. 3a) und nach der rechteckigen Pulsausblendung (Fig. 3b),

Fig. 4    ein Beispiel für einen Pulsstörer sowie eine Fensterfunktion für eine weiche Pulsausblendung (Fig. 4a) und die zugehörige Fouriertransformierte (Fig. 4b) erhalten durch die Bandbegrenzung der Fensterfunktion für die rechteckige Pulsausblendung gemäß Fig. 2,

Fig. 5    eine logarithmische Frequenzbereichsdarstellung der Überlagerung des beispielhaften OFDM-Nutzsignals mit dem Pulsstörer vor einer Pulsausblendung (Fig. 5a) und nach der weichen Pulsausblendung gemäß Fig. 4 (Fig. 5b),

Fig. 6    Spektrum des Rechteckfensters (Fig. 6a) und zwei Beispiele der Spektrumreduktion auf 64 Koeffizienten (Fign. 6b und 6c),

Fig. 7    die aus den in Fig. 6 dargestellten Spektren resultierenden Fensterfunktionen,

Fig. 8    die Auswirkung der Fensterung auf das Spektrum eines Pulsstörers,

Fig. 9    ein Beispiel eines reduzierten Spektrums mit 8 Koeffizienten (Fig. 9a) und die resultierende Fensterfunktion (Fig. 9b),

Fig. 10   ein Beispiel eines reduzierten Spektrums mit 16 Koeffizienten (Fig. 10a) und die resultierende Fensterfunktion (Fig. 10b),

Fig. 11   ein Beispiel eines reduzierten Spektrums mit 64 Koeffizienten (Fig. 11a) und die resultierende Fensterfunktion (Fig. 11b),

Fig. 12   eine Überlagerung des Spektrums des Störsignals mit einem Nutzsignal vor einer Fensterung (Fig. 12a) und nach der Rechteckfensterung (Fig. 12b),

Fig. 13   ein Spektrum eines Pulsstörers ohne und nach der weichen Fensterung, mit einem Fenster mit 8 (Fig. 13a), 16 (Fig. 13b) und 64 (Fig. 13c) inneren spektralen Koeffizienten des Rechteckfensters.

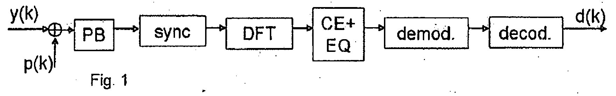

Im Rahmen des ersten Ausführungsbeispiels wird ein OFDM-System mit N Trägerfrequenzen und einem Subträgerabstand von $\Delta f$ betrachtet. Am Empfänger überlagert sich das OFDM-Nutzsignal $y(k)$ mit einem pulsförmigen Störsignal $p(k)$, das in demselben oder benachbarten Frequenzband liegt. Dadurch verbleibt selbst nach Empfangsfilterung zumindest ein Teil der Leistung des Pulsstörers im Spektrum des Nutzsignals. Es wird angenommen, dass eine Pulsausblendung nach dem Analog/Digital Wandler und vor der Synchronisation durchgeführt wird. Somit ergibt sich das in Fig. 1 dargestellte digitale Empfangssystem.

Ohne auf einen besonderen Algorithmus hinzuweisen, bedeuten die Bezeichnungen in den Blöcken der Fig. 1 folgendes:

PB = Pulsausblendung
sync = Synchronisation
DFT = Diskrete Fourier Transformation
CE+EQ = Kanalschätzung und Signal-Entzerrung
demod = Demodulation
decod = Dekodierung.

Weiterhin stellt y(k) das übertragene Nutzsignal nach Abtastung, p(k) den abgetasteten Pulsstörer und d die detektierten Informationsbits dar.

Die Störleistung kann durch eine Pulsausblendung im Zeitbereich deutlich reduziert werden. Da beide Techniken, "Pulse Blanking" und "Pulse Clipping", auf einer Rechteckfensterung des Zeitsignals beruhen, wird im Folgenden der Vorteil des vorgestellten Verfahrens repräsentativ bezüglich der Technik "Pulse Blanking" erläutert, die im Folgenden als rechteckiges PB bzw. rechteckige Pulsausblendung bezeichnet wird.

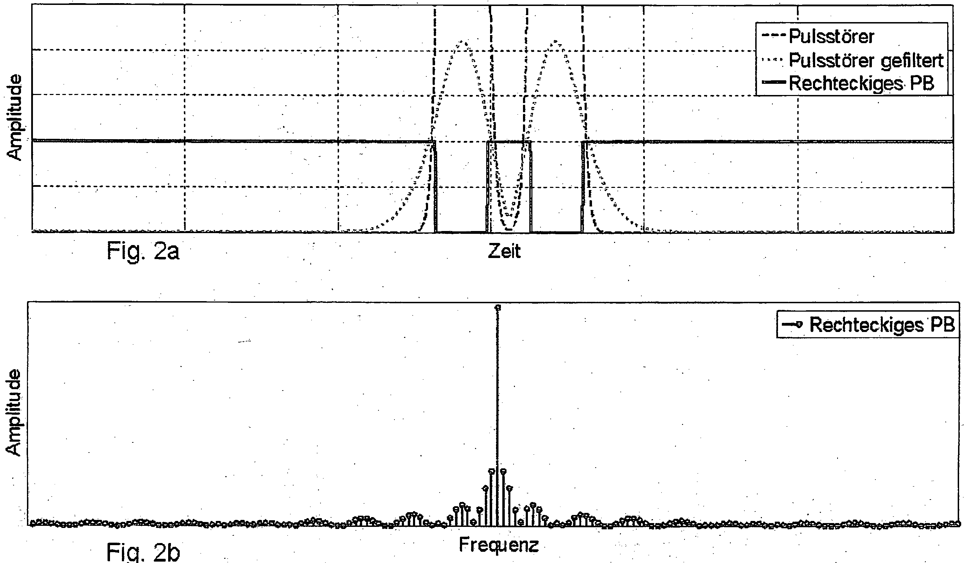

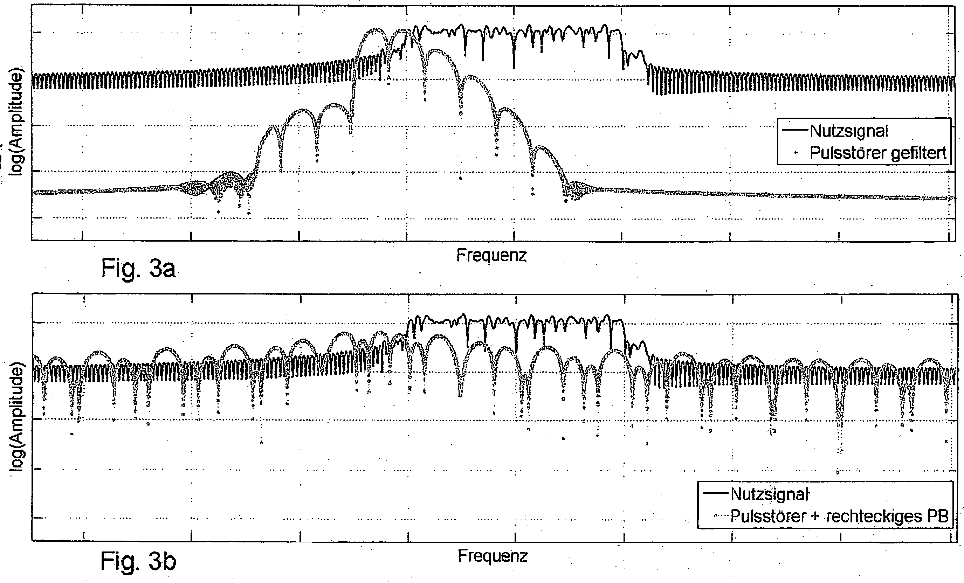

Ein einfaches Beispiel eines Pulsstörers (Doppelpuls) und der rechteckigen Pulsausblendung ist in Fig. 2a dargestellt. Fig. 2b zeigt die aus der FourierTransformation der Länge N resultierende Frequenzbereichsdarstellung der rechteckförmigen Fensterfunktion. Zum einen bewirkt das Nullsetzen von Abtastwerten im Zeitbereich durch die Pulsausblendung die Zerstörung der Orthogonalität zwischen den Subträgern des OFDM-Nutzsignals im Frequenzbereich und zum anderen wird der Störeinfluss des Pulsstörers über die gesamte Nutzbandbreite ausgeweitet wie in Fig. 3 dargestellt. Im Detail zeigt Fig. 3 im logarithmischen Maßstab das beispielhafte OFDM-Nutzsignal und den durch das Empfangsfilter gefilterten Pulsstörer aus Fig. 2 einmal vor (Fig. 3a) und einmal nach der Pulsausblendung (Fig. 3b). Die durch die rechteckige Pulsausblendung erzeugte Ausweitung des Störeinflusses des Pulsstörer auf die gesamte Nutzbandbreite resultiert in einer Verschlechterung des Signal-Stör-Verhältnisses auf jedem Subträger des Nutzsignals und somit für jedes zu detektierende Modulationssymbol. Eine gezielte "Erasure"-Setzung ist in diesem Fall nicht möglich da zu viele bzw. alle Subträger des Nutzsignals gestört sind. Somit kann eine "Erasure"-Dekodierung nicht gewinnbringend eingesetzt werden.

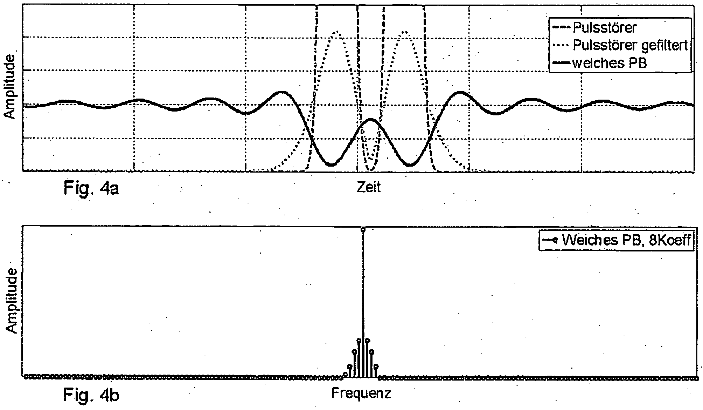

Im Gegensatz zur rechteckigen Pulsausblendung wird bei der "weichen" Pulsausblendung eine Fensterfunktion eingesetzt, die keine harten Übergänge aufweist, wie es bei einem Rechteckfenster der Fall ist. Fensterfunktionen mit weichen Übergängen können sowohl im Zeit- als auch im Frequenzbereich entworfen werden und sind nicht Gegenstand der Erfindung sondern Stand der Technik. Im Weiteren wird als Beispiel für eine Fensterfunktion mit weichen Übergängen ein im Frequenzbereich entworfenes Fenster betrachtet, das aus der Frequenzbereichsdarstellung des Rechteckfensters durch Nullsetzen der spektralen Anteile außerhalb einer bestimmten Bandbreite hervorgeht, siehe Fig. 4b. In Fig. 4a ist die entsprechende Fensterfunktion für eine weiche Pulsausblendung dargestellt.

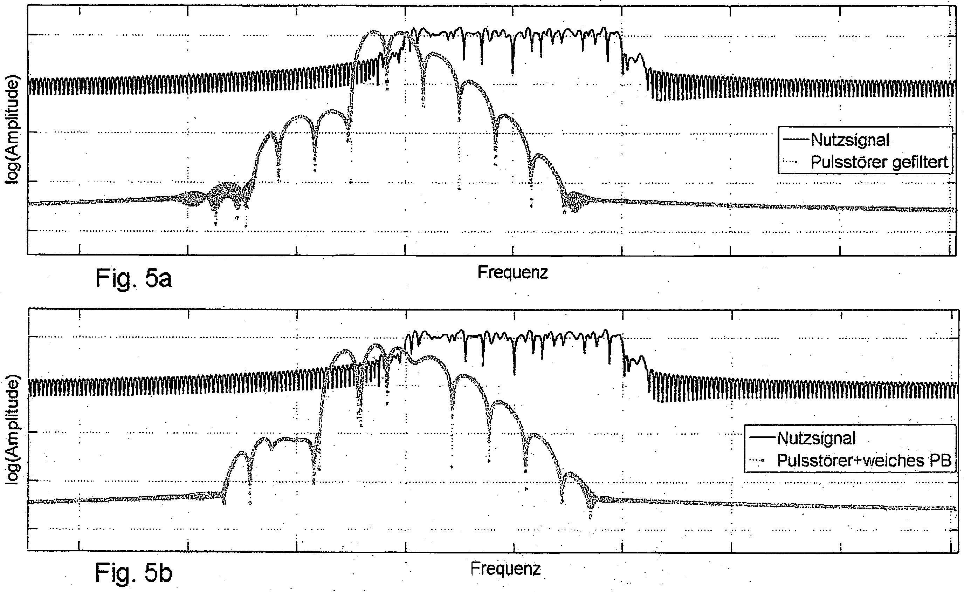

Der Vergleich der Fign. 3 und 5 veranschaulicht den unterschiedlichen Einfluss von rechteckiger und weicher Pulsausblendung. Während der Einflussbereich des Pulsstörers nach der rechteckigen Pulsausblendung über alle Subträger verbreitert wird, bleibt der Einflussbereich des Pulsstörers nach der weichen Pulsausblendung nahezu auf den gleichen Bereich begrenzt wie vor der Pulsausblendung. Eine anschließende "Erasure"-Dekodierung würde eine weitere Reduktion des Einflusses des Pulsstörers ermöglichen, so dass aus der Kombination von weicher Pulsausblendung mit "Erasure"-Dekodierung eine deutlich verbesserte Systemperformanz resultiert als im Falle der rechteckigen Pulsausblendung. "Erasure"-Dekodierung kann so gewinnbringend eingesetzt werden, da nun gezielt "Erasures" für die Modulationssymbole gesetzt werden können, die auf den stark gestörten Subträgern liegen.

Die Anzahl der Fehler und Erasures, die das System mittels Decodierung korrigieren kann, lässt sich nicht deterministisch bestimmen. Ob eine zuverlässige Übertragung mittels "Erasure" Decodierung zur Unterdrückung einer pulsartigen Störung möglich ist, hängt ab von der Anzahl der betroffenen Träger des Nutzsignals, vom gewählten Code und Code-Rate und von dem Kanal ab. Im Hinblick auf "Erasure" Decodierung zur Verbesserung der Systemperformance unter pulsartiger Interferenz ist ein möglichst schmales Störspektrum von Vorteil.

Führt "Erasure" Decodierung - ohne eine Fensterung des Pulsstörers unter der Annahme der perfekten Synchronisation (Simulationsumgebung) - zu keiner erfolgreichen Interferenzunterdrückung (d.h., das Signal kann nicht detektiert werden, weil zu viele Träger betroffen sind), dann lässt sich das gestörte Signal auch mittels der Fensterung und "Erasure" Decodierung nicht detektieren.

Der Erfindungsgedanke ist nicht auf das oben beschriebene Ausführungsbeispiel beschränkt, sondern lässt sich auf folgende Fälle verallgemeinern:

- Der Erfindungsgedanke ist nicht nur auf OFDM-Systeme anwendbar, sondern auf alle Übertragungsverfahren, die auf OFDM beruhen, wie beispielsweise "Orthogonal Frequency-Division Multiple-Access" (OFDMA), "Multi-Carrier Code-Division Multiple-Access" (MC-CDMA), Code-Division Multiplexing OFDMA (CDM-OFDMA) auch als Spread-Spectrum Multi-Carrier Multiple-Access (SS-MC-MA) bekannt, usw.

- Der Erfindungsgedanke ist auch auf "Single-Carrier Frequency-Division Multiple-Access" (SC-FDMA) Systeme anwendbar. Diese lassen sich als ein Spezialfall von CDM-OFDMA mit Fourier-Spreizung darstellen.

- Der Erfindungsgedanke ist auf OFDM-Systeme oder Systeme, die auf OFDM beruhen, mit beliebiger Trägeranzahl N anwendbar.

- Der Erfindungsgedanke ist nicht auf das verwendete Beispiel für eine Fensterfunktion mit weichen Übergängen begrenzt, das im Frequenzbereich durch Begrenzung der Bandbreite erzeugt wird. Vielmehr können beliebige, nicht-rechteckförmige Fensterfunktionen eingesetzt werden. Diese können sowohl im Frequenz- als auch im Zeitbereich entworfen werden. Besonders geeignete Fensterfunktionen bewirken, dass das Störsignal möglichst wenig im Frequenzbereich verbreitert wird.

- Anwendung im Mobilfunk und in drahtlosen Netzen
Erweiterungen des Mobilfunkstandards (3GPP/LTE) und aktuelle und geplante Techniken für drahtlose Netze (WiFi, WiMAX, Weiterentwicklungen davon) sehen den Einsatz der OFDM-Technik vor. Mit der Erfindung können solche Systeme robust gegenüber pulsförmigen Störern gemacht werden.

- Anwendung auf zukünftige Luftfahrtkommunikationssysteme
Im Bereich der Luftfahrtkommunikation wird aktuell ein neues Kommunikationssystem definiert, das im L-Band arbeiten soll. Ein Systemvorschlag basiert auf OFDM und nachdem im L-Band starke Interferenz durch Pulsstörer vorliegt, bietet sich hier der Einsatz der Erfindung besonders an.

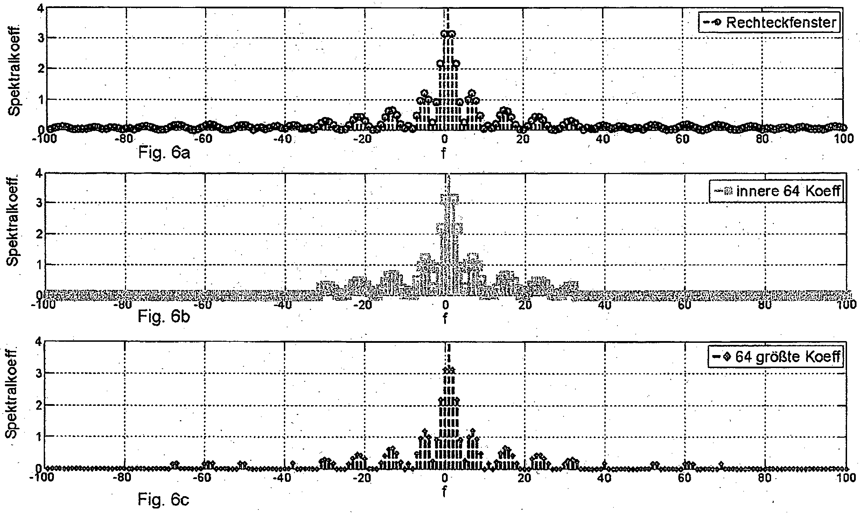

In nachfolgenden Erläuterungen werden unter Bezugnahme auf die Fign. 6 bis 13 die Wesensmerkmale der Erfindung sowie Beispiele für "weiche" Fensterfunktionen angegeben.
Pulse Blanking wird zur Reduktion der Interferenz durch pulsartige Störer angewandt. Ein solcher Störer befindet sich entweder im Nutzband oder im angrenzenden Frequenzband, so dass sich das Störspektrum mit dem Nutzspektrum teilweise überlappt.
Das Nutzsignal am Empfängereingang wird blockweise verarbeitet, d.h. ein Datenblock der Länge $T_0$ wird aus dem Empfangssignal ausgeschnitten. Diese blockweise Verarbeitung lässt sich als Multiplikation mit einer Rechteckfunktion, im Folgenden Blockfunktion genannt, darstellen. Ohne Einschränkung der Allgemeinheit nehmen wir an dass diese Blockfunktion im Zeitbereich um Null zentriert ist, $b(t) = A \cdot rect_{T_0}(t)$. Deren Fouriertransformierte ist dann

$$B(f) = 2AT_0 \cdot si(2\pi fT_0), \text{ mit } si(x) = \sin(x)/x. \qquad \text{[Gleichung 1]}$$

Eine zeitliche Verschiebung der Blockfunktion, z.B. $b'(t) = A \cdot rect_{T_0}(t-t_0)$, bewirkt die Änderung des Phasenspektrums, der Amplitudenspektrum bleibt jedoch unverändert:

$$B'(f) = 2AT_0 \cdot si(2\pi fT_0) \cdot e^{j\pi f t_0} \qquad \text{[Gleichung 2]}$$

und $|B(f)|=|B'(f)|$.
Es sei angenommen, dass eine Fensterung eines schmalen Datenausschnittes zum Zweck der Pulse Blanking mit einem Rechteckfenster der Breite $T_1$, das um $t=t_1$ $t_1$ zentriert ist, erfolgt. Die Resultierende Blockfunktion lässt sich schreiben als

$$f(t) = b(t) - w(t) = A \cdot rect_{T_0}(t) - A \cdot rect_{T_1}(t - t_1). \qquad \text{[Gleichung 3]}$$

Dabei kann $t_1$ jeden Wert zwischen $-T_0/2$ und $T_0/2$ annehmen.
Die Abtastung des Frequenzbereich-Signals mit der Abtastfrequenz $1/T_0$ führt zu einer periodischen Wiederholung der Zeitfunktion. D.h., die periodische Wiederholung der Blockfunktion ergibt eine Konstante $b^p(t) = A, \forall t$ und die Rechteck-funktion $w(t) = A \cdot rect_{T_1}(t - t_1)$ wird mit Periode $T_0$ auftreten, $w^p(t) = A \cdot rect_{T_1}(t-t_1) \cdot \sum \delta(t-iT_0)$. Deshalb gleicht das Amplitu-denspektrum von $f(t) = b(t) - w(t)$ dem Amplitudenspektrum der Rechteckfunktion $b'(t) = A \cdot rect_{T_0-T_1}(t)$.
Eine Rechteckfunktion weist Frequenzanteile $\neq 0$ auf (f=0 im Basisband entspricht nach dem Hochmischen der Mittenfrequenz im Übertragungsband). Die Rechteckfensterung des Empfangssignals verursacht das Subträgerübersprechen (ICI) im Frequenzbereich. Die scharfen Kanten in der Fensterfunktion entsprechen den hohen Frequenzanteilen, d.h. verursachen ein weites Übersprechen. Um die Daten noch zuverlässig zu detektieren (demodulieren und decodieren) müsste erst einmal eine Entzerrung im Frequenzbereich erfolgen. Die Komplexität der Entzerrung hängt von der Länge des Übersprechens ab (max DFT Länge $N$).
Wird allerdings ein störender Puls im Zeitbereich ausgeschnitten, bewirkt die Fensterung nicht nur das Übersprechen zwischen den Subträgern des Nutzsignals, sondern auch eine Verbreiterung des Störspektrums und somit eine Verringerung des Signal-Stör-Verhältnisses auf betroffenen Subträgern.
Das "Übersprechen" im Frequenzbereich lässt sich also erfindungsgemäß reduzieren, indem man eine "weiche" Fensterfunktion zur Ausblendung des Pulsstörer einsetzt.

Eine beliebige weiche Fensterfunktion

1. weist, im Zeitbereich betrachtet, weiche Übergänge zwischen dem auszublendenden und nicht auszublendenden Bereich auf (gröbste Verallgemeinerung: kein 1 -> 0 oder 0 -> Sprung) und

2. hat, im Frequenzbereich betrachtet, ein schmaleres Spektrum als das Rechteckfenster.

Dabei sind die Eigenschaften 1 und 2 äquivalent.

Eine weiche Fensterung verzerrt das Zeitbereichssignal im nicht-auszublendenden Bereich. Die Verzerrung im Zeitbereich ist umgekehrt proportional der ICI im Frequenzbereich. Da das Spektrum der Fensterfunktion frei zu wählen ist, ist die resultierende Verzerrung bekannt und kann rückgängig gemacht werden.

Da die Daten unbekannt sind lässt sich die Entzerrung in beiden Fällen, im Zeit- und im Frequenzbereich, nur suboptimal machen. Außerdem beeinflusst die ICI im Frequenz-, bzw. die Verzerrung im Zeitbereich auch die Kanalschätzung. Methoden für gemeinsame oder iterative Kanalschätzung und Entzerrung sind vorhanden (z.B. MMSE) und werden hier nicht betrachtet.

Ohne eine pulsartige Störung sind die Problemstellungen

a) Subträgerübersprechen und

b) Verzerrung im Zeitbereich

äquivalent. Wird allerdings ein störender Puls im Zeitbereich ausgeschnitten, bewirkt die Fensterung nicht nur ICI im Frequenzbereich, sondern auch eine Verbreiterung des Störspektrums und somit eine Verringerung des Signal-zuStör-Verhältnisses auf betroffenen Subträgern. Da eine weiche Fensterung das Störspektrum nur geringfügig verbreitert, ist die geeigneter zu Bekämpfung der Pulsstörer in einem Multiträgersystem.

**Beispiel für weiche Fensterung**

Fig. 6 zeigt zwei Methoden der Reduktion der Anzahl der Spektralen Koeffizienten zur Erzeugung eines "weichen" Fensters:

1. Alle bis auf K inneren Spektralen Koeffizienten werden auf 0 gesetzt

2. Alle bis auf K größten Spektralen Koeffizienten werden auf 0 gesetzt Eine mögliche Methode, die in Fig. 6 nicht dargestellt ist, wäre:

3. Das Spektrum des Rechteckfensters wird gefiltert, wobei die Filterbandbreite $B_P = K/T_0$ gewählt wird.

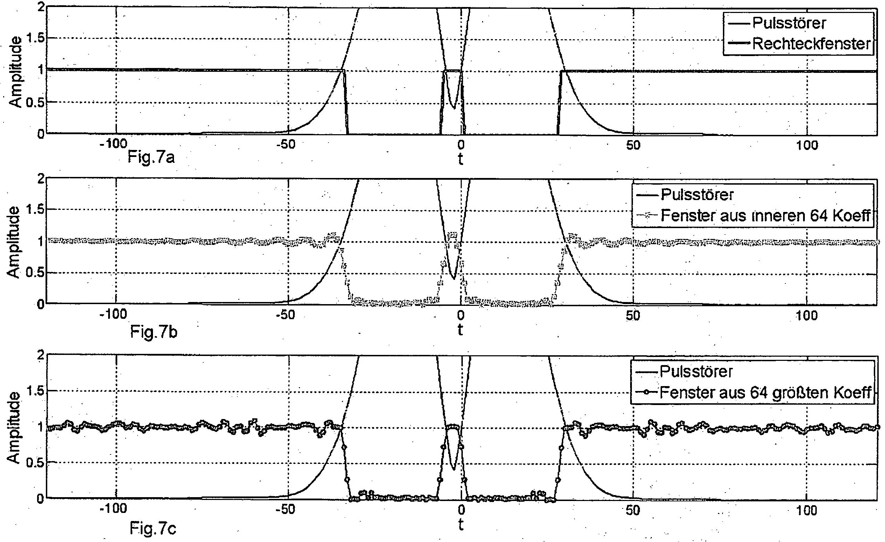

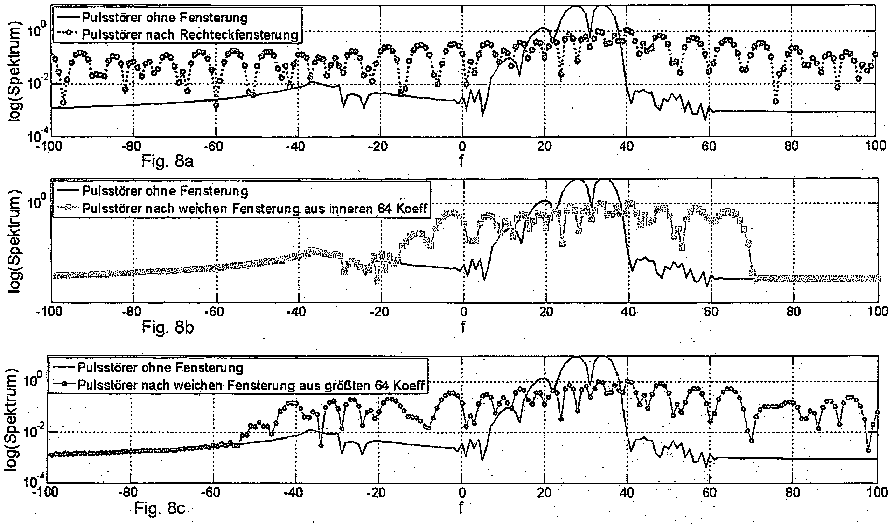

Die aus Methode 1 und 2 resultierenden Fensterfunktionen sind in Fig. 7 gezeigt. Beide weiche Fenster verursachen ähnliche Verzerrung des Nutzsignals. Man könnte z.B. mittels LSE Ansatzes die Abweichung beider Fenster vom Rechteckfenster auswerten und vergleichen. Allerdings liegt das Problem in der Auswirkung auf den Pulsstörer im Frequenzbereich, wie Fig. 8 zeigt. Deshalb ist weniger die Form der weichen Fensterung als die Breite des resultierenden Störspektrums ausschlaggebend für die Güte der Systemperformance.

Ein Rechteckfenster verschmiert das Störsignal über das gesamte Nutzspektrum. In dem Sinne ist ein "weiches" Fenster jedes Fenster, das die Verschmierung des Störsignals über das gesamte Nutzspektrum vermeidet.

Im Folgenden wird untersucht, wie ein geeignetes Fenster zu wählen ist, bzw. wie sich eine Aussage darüber treffen lässt, wie viele spektrale Koeffizienten ≠ 0 - bei den dargestellten Methoden - zu einer weichen Fensterung herangezogen werden sollen.

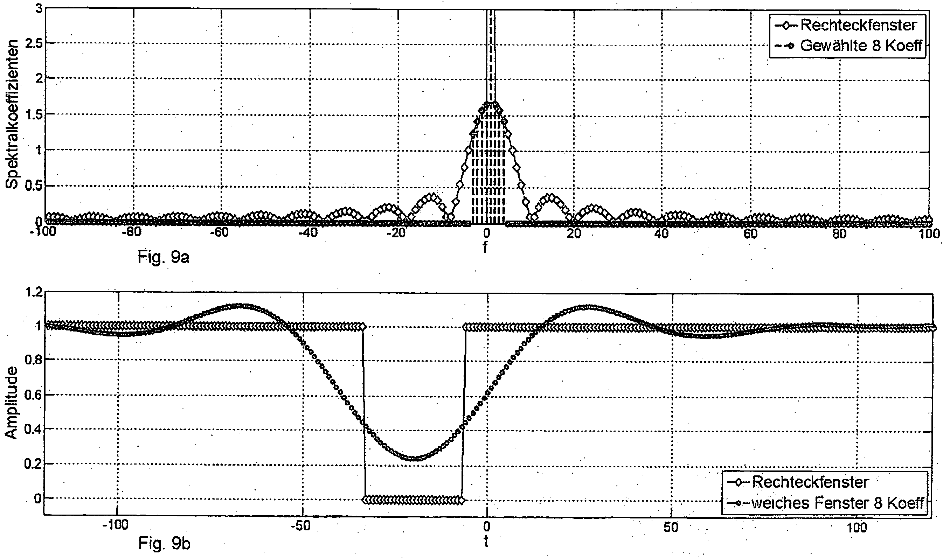

Betrachtet sei zunächst die Reduktion der Störenergie und die Verzerrung des Nutzsignals im Zeitbereich. Ohne Einschränkung der Allgemeinheit sei als Fensterfunktion die Rechteckfunktion f(t) aus Gleichung 3 gewählt. Fig. 9a zeigt das Spektrum der Rechteckfunktion und die für die weiche Fensterung gewählten spektralen Koeffizienten. Beide erwähnte Methoden, 1 und 2, liefern hier das gleiche Ergebnis, bzw. die in Fig. 9b dargestellte Fensterfunktion.

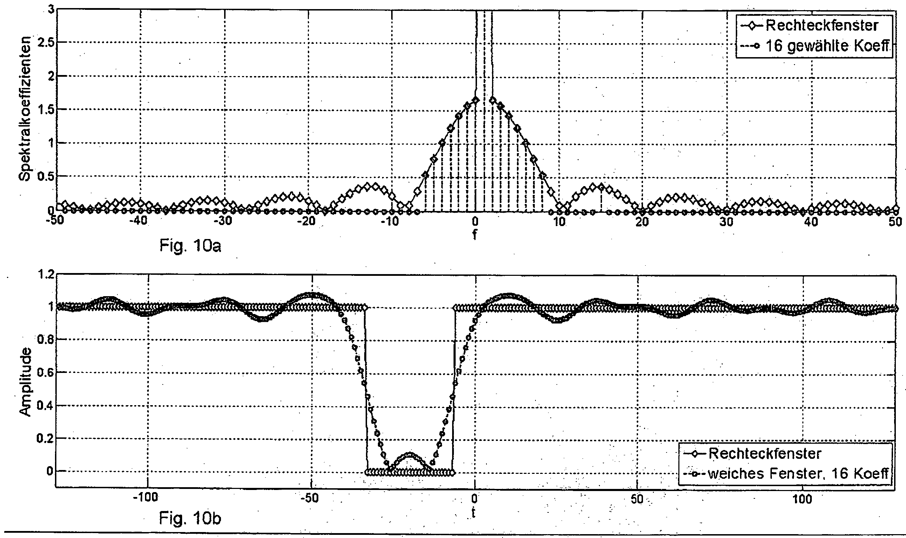

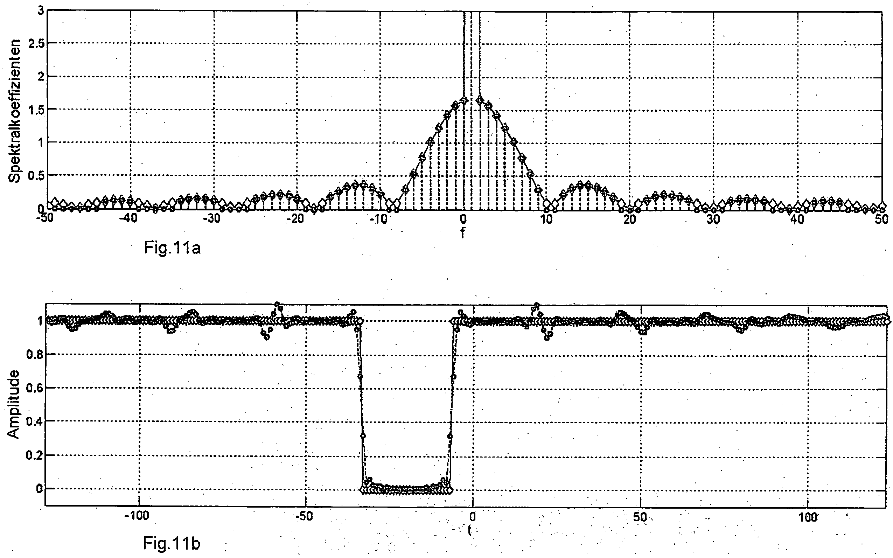

Verglichen sei dazu das weiche Fenster erzeugt mit 16, bzw. 64 Koeffizienten. Die entsprechenden spektralen Koeffizienten und resultierende Fensterfunktionen sind dargestellt in den Fign. 10 und 11.

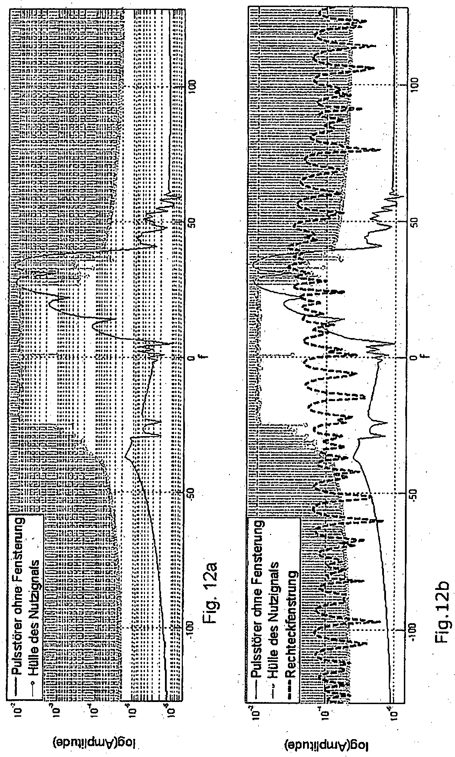

Fig. 12a zeigt als Beispiel eines Störsignals das am Rand des Nutzbandes operiert, so dass es sich trotz Empfangsfilterung mit dem Teil des Nutzsignals überlagert. Fig. 12b zeigt die Auswirkung der Rechteckfensterung des Pulsstörers auf das OFDM basierte Nutzsignal.

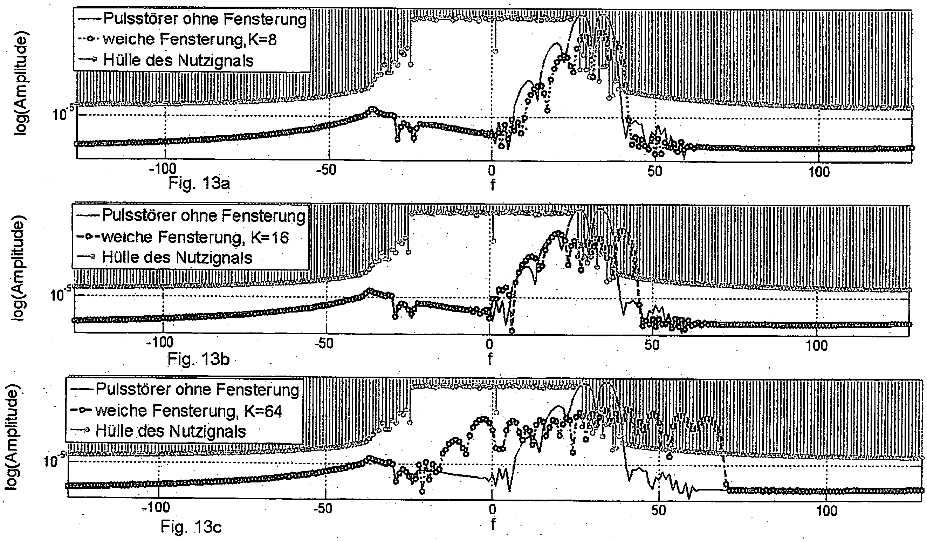

Der Einfluss der weichen Fensterung auf das Spektrum des Pulsstörers ist in Fig. 13 dargestellt. Dabei zeigen Fign. 13a, b und c die Unterschiede zwischen Fensterfunktionen erzeugt mit 8, 16 und 64 Koeffizienten.

Umso größer die Anzahl der spektralen Koeffizienten, desto besser nähert das weiche Fenster das Rechteckfenster. Gleichzeitig bedeutet das, dass ein weicheres Fenster (weniger Koeffizienten) das Nutzsignal stärker verzerrt aber auch die Störleistung nicht vollständig ausblendet. Folglich wird sich im ersten Fall (8 Koeffizienten) insgesamt mehr Störleistung über das Nutzspektrum überlagern. Allerdings bleibt diese Störleistung zum größten Teil im ursprünglichen Frequenzbereich. Somit kann mit einer gezielten Behandlung der betroffenen Subträger mit Erasure Dekodierung die Auswirkung des Störers deutlich gemildert werden.

**Patentansprüche**

1. Verfahren zur Verringerung der Störeinflüsse von pulsförmigen Störsignalen bei einer OFDM-basierten Datenübertragung, mit dem Schritt des

   - Multiplizierens eines Übertragungssignals, das ein Mehrträgerfrequenzsignal mit einzelnen Trägerfrequenzen zugeordneten modulierten Daten aufweist, mit einer Fensterfunktion zur Ausblendung eines pulsförmigen Störsignals im Übertragungssignal,
   - wobei die Fensterfunktion - im Zeitbereich als kontinuierliche Funktion betrachtet - differenzierbar ist,
   - wobei das mit der Fensterfunktion multiplizierte Übertragungssignal nach einer Übertragungskanalschätzung und Signalentzerrung dekodiert wird, wobei bei der Übertragungskanalschätzung den Daten, die den einzelnen Trägerfrequenzen jeweils zugeordnet sind, ein Zuverlässigkeitswert zugeordnet wird, der beschreibt, wie glaubwürdig die empfangenen bzw. geschätzten Daten sind, und
   - wobei der Zuverlässigkeitswert für diejenigen Daten, die den von einem pulsförmigen Störsignal betroffenen Trägerfrequenzen zugeordnet sind, vor der Dekodierung jeweils auf null gesetzt wird,

   **dadurch gekennzeichnet,**

   - **dass** die Fensterfunktion aus einer im Zeitbereich die Breite $T_0$ aufweisenden und im Frequenzbereich durch ein Spektrum mit einer Mittenfrequenz und spektralen Koeffizienten definierten Rechteckfensterfunktion, realisiert wird, und zwar

     - entweder durch eine Filterung des Spektrums mittels eines Filters mit einer Bandbreite, die das 8-fache oder 16-fache von $1/T_0$ beträgt,
     - oder durch die Reduktion des Spektrums auf die K wertmäßig größten spektralen Koeffizienten oder auf diejenigen K spektralen Koeffizienten, deren zugehörige Frequenzen nächstliegend zur Mittenfrequenz des Spektrums sind, wobei der Parameter K gleich 8 oder 16 gewählt wird,
     - womit eine Verbreiterung des Störsignals im Frequenzbereich und damit eine Erhöhung der Anzahl der von der Interferenz betroffenen Symbole vermieden wird.

2. Verfahren nach Anspruch 1 , **dadurch gekennzeichnet, dass** das pulsförmige Störsignal im Übertragungssignal durch die Multiplikation des Übertragungssignals mit der Fensterfunktion ausgeblendet wird, indem die Fensterfunktion das pulsförmige Störsignal auf null oder auf Werte ungleich null herabsetzt.

3. Verfahren Anspruch 1 oder 2, **dadurch gekennzeichnet, dass** die Multiplikation digital erfolgt, wobei die Fensterfunktion in Form diskreter Werte zu vorgegebenen Abtastzeitpunkten vorliegt und das Nutzsignal abgetastet sowie die Nutzsignal-Abtastwerte mit den Werten zu den zeitlich entsprechenden Abtastzeitpunkten der Fensterfunktion multipliziert werden.

**Claims**

1. A method for reducing the interfering influences of pulse-shaped interference signals in OFDM-based data transmission, comprising the step of

   - multiplying a transmission signal comprising a multi-carrier frequency signal including modulated data allocated to individual carrier frequencies, by a window function for blanking out a pulse-shaped interference signal in the transmission signal,
   - wherein the window function - when seen in the temporal range as a continuous function - is differentiable,

- wherein, after transmission channel estimation and signal distortion correction, the transmission signal multiplied by the window function is decoded, wherein, in said transmission channel estimation, the data respectively allocated to the individual carrier frequencies get allocated to them a reliability value describing how reliable the received and respectively estimated data are, and

- wherein the reliability value for those data that have been allocated to the carrier frequencies affected by a pulse-shaped interference signal is, prior to said decoding, each time set to zero,

**characterized in**

- **that** the window function is realized from a rectangular window function which in the time domain has the width $T_0$ and in the frequency domain is defined by a spectrum having a center frequency and spectral coefficients, namely

- either by filtering the spectrum by means of a filter having a bandwidth 8 or 16 times as large as $1/T_0$,
- or by reducing the spectrum to the largest spectral coefficients with respect to the K-value, or to those K spectral coefficients whose appertaining frequencies are closest to the center frequency of the spectrum, wherein the parameter K is selected to be 8 or 16,
- so that a widening of the interference signal in the frequency range and a resultant increase of the number of symbols affected by the interference are avoided.

2. The method according to claim 1, **characterized in that** the pulse-shaped interference signal in the transmission signal is blanked out through said multiplication of the transmission signal by the window function **in that** the window function reduces the pulse-shaped interference signal to zero or to values not equal to zero.

3. The method according to claim 1 or 2, **characterized in that** said multiplication is performed digitally, wherein the window function is available in the form of discrete values related to predefined sampling times, and that the useful signal is sampled and the useful signal sampling values are multiplied by said values related to the temporally corresponding sample times of the window function.

**Revendications**

1. Procédé destiné à réduire les influences perturbatrices de signaux d'interférence en forme d'impulsions lors d'une transmission de données à base d'OFDM, comprenant l'étape de :

- multiplication d'un signal de transmission - qui présente un signal de fréquence multiporteuse comportant des données modulées associées à des fréquences porteuses individuelles - avec une fonction de fenêtrage pour la suppression d'un signal d'interférence en forme d'impulsions dans le signal de transmission,
- la fonction de fenêtrage - considérée comme une fonction continue dans le domaine temporel - pouvant être différenciée ;
- le signal de transmission multiplié par la fonction de fenêtrage étant décodé après une évaluation de canaux de transmission et égalisation de signal, une valeur de fiabilité étant associée, lors de l'évaluation de canaux de transmission, aux données qui sont respectivement associées aux fréquences porteuses individuelles, valeur de fiabilité qui décrit la crédibilité des valeurs reçues ou évaluées, et
- la valeur de fiabilité étant respectivement mise à zéro avant le décodage pour les données qui sont associées aux fréquences porteuses concernées par un signal d'interférence en forme d'impulsions,

**caractérisé en ce que**

- la fonction de fenêtrage consiste en une fonction de fenêtrage rectangulaire présentant la largeur $T_0$ dans le domaine temporel et définie dans le domaine fréquentiel par un spectre ayant une fréquence centrale et des coefficients spectraux, qui est réalisée
- soit par un filtrage du spectre à l'aide d'un filtre ayant une largeur de bande égale à 8 fois ou 16 fois $1/T_0$,
- soit par la réduction du spectre aux K coefficients spectraux les plus grands en valeur ou aux K coefficients spectraux dont les fréquences correspondantes sont les plus proches de la fréquence centrale du spectre, le paramètre K étant égal à 8 ou 16,
- ce qui évite un élargissement du signal d'interférence dans le domaine fréquentiel et ainsi une augmentation du nombre des symboles concernés par l'interférence.

**2.** Procédé selon la revendication 1, **caractérisé en ce que** le signal d'interférence en forme d'impulsions dans le signal de transmission est supprimé par la multiplication du signal de transmission par la fonction de fenêtrage, et ce, par le fait que la fonction de fenêtrage ramène le signal d'interférence en forme d'impulsions à zéro ou à des valeurs différentes de zéro.

**3.** Procédé selon la revendication 1 ou 2, **caractérisé en ce que** la multiplication s'effectue de manière numérique, la fonction de fenêtrage existant sous la forme de valeurs discrètes à des instants d'échantillonnage prédéterminés et le signal utile étant échantillonné, et les valeurs d'échantillonnage du signal utile étant multipliées par les valeurs aux instants d'échantillonnage correspondants dans le temps de la fonction de fenêtrage.

y(k) → ⊕ → PB → sync → DFT → CE+ EQ → demod. → decod. → d(k)

p(k) ↑

Fig. 1

Fig. 2a

Fig. 2b

Fig. 3a

Legend: Nutzsignal / Pulsstörer gefiltert
Axes: log(Amplitude) / Frequenz

Fig. 3b

Legend: Nutzsignal / Pulsstörer + rechteckiges PB
Axes: log(Amplitude) / Frequenz

Fig. 4a

Fig. 4b

Fig. 5a

Fig. 5b

Fig. 6a

Fig. 6b

Fig. 6c

EP 2 656 565 B1

Fig.7a

Fig.7b

Fig.7c

Fig. 8a

Fig. 8b

Fig. 8c

Fig. 9a

Fig. 9b

Fig. 10a

Fig. 10b

Fig.11a

Fig.11b

Fig. 12a

Fig.12b

Fig. 13a

Fig. 13b

Fig. 13c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004002101 A

**In der Beschreibung aufgeführte Nicht-Patentliteratur**

- **SCHNELL ; MICHAEL ; BRANDES ; SINJA ; GLIGOREVIC ; SNJEZANA ; WALTER ; MICHAEL ; RIHACEK ; CHRISTOPH.** Interference Mitigation for Future L-Band Digital Aeronautical Communications Systems. *Proceedings of the 27th Digital Avionics Systems Converence,* 26. Oktober 2008
- **A. BATRA ; J. R. ZEIDLER.** *Erasure Insertion*
- Narrowband interference mitigation in BICM OFDM systems. *Proc.,* 2009
- *IEEE Intl. Conf. Acoustics, Speech, and Signal Processing,* April 2009

- **FIEBIG UC ; ROBERTSON P.** *Erasures for Convolutional Codes*
- Soft-decision and erasure decoding in fast frequency-hopping systems with convolutional, turbo, and reed-solomn codes. *IEEE Transactions Communications,* 1999, vol. 47 (11), 1646-1654
- **HAGENAUER, J.** Soft-in/soft-out: The benefits of using soft-decisions in all stages of digital receivers. *3rd International Workshop on DSP Techniques applied to Space Communications,* September 1992
- Interference mitigation for broadband L-DACS. **SCHNELL M et al.** DIGITAL AVIONICS SYSTEMS CONFERENCE. IEEE, 26. Oktober 2008